# FASCICULE DE BREVET EUROPEEN

(11) **EP 3 411 509 B1**
(45) Date de publication et mention de la délivrance du brevet: **30.12.2020**
(21) Numéro de dépôt: 17707375.6
(22) Date de dépôt: 02.02.2017
(51) Int. Cl.: C21D 6/00, C21D 8/10, C22C 38/00, F16L 9/02, C22C 38/02, C22C 38/04, C22C 38/40, C22C 38/42, C22C 38/44, C22C 38/48, C22C 38/50, C21D 9/08, C21D 1/28

(54) **COMPOSITIONS D'ACIERS AUX PROPRIÉTÉS ANTI-COKAGE AMÉLIORÉES**
ZUSAMMENSETZUNG FÜR EINEN STAHL MIT VERBESSERTEN ANTIKOKUNGS-EIGENSCHAFTEN
ELEMENTAL COMPOSITION FOR STEEL WITH IMPROVED ANTI-COKING PROPERTIES

(30) Priorité: 02.02.2016 FR 1650832
(43) Date de publication de la demande: 12.12.2018
(73) Titulaire: Vallourec Tubes France, 92100 Boulogne-Billancourt (FR)
(72) Inventeur: ROSSI, Valentin, 73490 La Ravoire (FR); BONILLA ANGULO, Fernando Andres, 78300 Poissy (FR); DULCY, Nicolas, 59300 Valenciennes (FR)
(74) Mandataire: Casalonga
(86) Numéro de dépôt international: PCT/FR2017/050243
(87) Numéro de publication internationale: WO 2017/134396

(56) Documents cités:
- EP-A1- 0 949 347
- EP-A1- 1 223 230
- EP-A1- 1 299 569
- EP-A1- 1 403 394
- WO-A2-2016/010599
- JP-A- S58 224 148
- JP-A- 2006 265 663
- US-A1- 2004 234 409

## Description

L'invention relève du domaine des aciers à usages spéciaux, en particulier de ceux destinés à être au contact de fumées de combustion. L'invention concerne également des composants tubulaires réalisés à base de tels aciers.

Les installations de traitement et de transformation de produits pétroliers comprennent plusieurs unités telles des fours, des cuves, des réacteurs et des cheminées qui sont reliées entre elles par des tubulures. Les parois de ces unités et tubulures sont en grande partie composées d'acier.

Des aciers adaptés pour les installations précitées doivent présenter des caractéristiques mécaniques adaptées aux conditions exigeantes telles que des hautes températures et des contraintes élevées. À défaut, un vieillissement accéléré dégrade les propriétés du composant. Pour cela, il est admis que la structure cristalline des aciers doit être maîtrisée. Des plages de teneurs pour quelques éléments chimiques usuels sont indiquées à cet effet dans des normes, par exemple ASTM A335/A335M ou encore EN10216-2. Le respect des prescriptions de ces normes est fortement souhaitable, non seulement pour éviter d'obtenir des structures cristallines incompatibles avec les propriétés mécaniques souhaitées, mais aussi pour faire l'économie d'essais de conformité nombreux, longs et coûteux. La réalisation d'un acier au plus près des prescriptions de ces normes permet par ailleurs d'améliorer son acceptabilité par le secteur industriel.

Ces normes définissent également des familles de compositions d'aciers alliés dont les propriétés mécaniques sont considérées comme, *a priori*, satisfaisantes pour une application donnée.

Au contact de fumées chargées en carbone, les surfaces des parois des installations précitées sont sujettes à des dépôts carbonés, ou coke. Ce phénomène est appelé cokage (*"coking"* en anglais).

Le cokage conduit au développement d'une couche carbonée sur les parois internes des installations. Les dépôts cokés entraînent des pertes de charges, des diminutions de l'efficacité des échanges thermiques entre l'intérieur et l'extérieur des parois, des dégradations chimiques et physiques desdites parois, des surcharges des parois, des obstructions au moins partielles des canalisations, etc. La durée de vie des installations s'en trouve limitée. Il est donc souhaitable de limiter le cokage. Or les normes visant les aciers ne fournissent pas d'informations quant au comportement des aciers vis-à-vis du cokage.

Pour préserver les installations, des opérations de décokage doivent être mises en œuvre régulièrement. Ces opérations d'entretien et de nettoyage sont coûteuses et nécessitent généralement l'arrêt des installations. L'efficacité des installations s'en trouve réduite.

Il est connu de déposer sur les surfaces des parois en acier un revêtement protecteur ralentissant le cokage. Ces revêtements peuvent être obtenus par l'application d'une composition spécifique ou par la formation d'un oxyde en surface, par exemple par passivation. Le document WO 2009/152134 décrit des tubes obtenus de cette manière. La fabrication de tels composants est complexe et coûteuse. Par ailleurs, de tels revêtements ne dispensent pas des opérations de décokage. Or une opération de décokage classique consiste à mettre en mouvement un boulet racleur de dimension ajustée dans les tubes pour gratter et évacuer les dépôts carbonés, à l'image d'un ramonage. Cette opération endommage, voire détruit complètement, toute surface interne protectrice des tubes. Par conséquent, une opération de dépôt d'un revêtement protecteur doit être réitérée après chaque opération de décokage. Ceci est fastidieux et coûteux, en particulier une fois que le composant tubulaire en acier est assemblé avec le reste de l'installation.

Le brevet FR 2 776 671 déposé par l'Institut Français du Pétrole décrit des aciers prévus pour être utilisés dans la fabrication de fours et de réacteurs. Cependant, la résistance mécanique et la résilience de tels aciers sont faibles.

La demande de brevet japonaise JP 2006-265663 déposée par Nisshin Steel Co. LTD décrit une composition d'acier utilisé pour la fabrication de courroies de transmission ayant des caractéristiques améliorées de résistance à la fatigue. La demande de brevet EP 1223230 A1 décrit une composition d'acier avec des propriétés anti-cokage.

L'invention vient améliorer la situation.

Le demandeur a cherché à améliorer la résistance au cokage et à préserver les autres propriétés mécaniques par des compositions d'acier dont les éléments chimiques présentent des teneurs choisies. Ces teneurs étaient inconnues mais respectent essentiellement les normes en vigueur, permettant ainsi une mise en œuvre à bref délais en évitant de longs tests qualificatifs. Autrement dit, le demandeur a mis au point des compositions chimiques d'acier inédites et respectueuses des principales exigences des normes reconnues par les acteurs du domaine technique considéré.

Le demandeur propose à cet effet une composition d'acier pour la fabrication de composants aux propriétés anti-cokage améliorées, consistant en pourcentage massique :
- de 0,08% à 0,15 % de carbone (C),
- de 0,3 à 1 % de manganèse (Mn),
- de 1,4 à 3 % de silicium (Si),
- de 0,5 à 3 % de cuivre (Cu),
- de 8 à 10 % de chrome (Cr),
- de 0,5 à 3 % de nickel (Ni),
- de 0,01 à 0,07 % d'azote (N),
- de 0,8 à 1,1 % de molybdène (Mo),
- de 0 à 0,04% d'aluminium (Al),
le reste de la composition étant du fer (Fe) et des impuretés, parmi lesquelles la teneur massique des impuretés suivantes ne dépasse pas :
- 0,025 % de phosphore (P),
- 0,02 % de soufre (S),
- 0,02 % de titane (Ti),
- 0,05 % de niobium (Nb),
- 0,05 % de vanadium (V),
- 0,1 % de tungstène (W), et
- 0,05 % de cobalt (Co).

Dans un autre mode de réalisation de l'invention, la teneur en carbone est comprise entre 0,09 % et 0,11 %.

Dans un mode de réalisation de l'invention, la teneur en silicium est comprise entre 1,5 % et 2,5 %.

Dans un mode de réalisation de l'invention, la teneur en cuivre est comprise entre 0,5 % et 2 %.

Dans un mode de réalisation de l'invention, la teneur en nickel est comprise entre 0,5 % et 2,7 %.

Dans un mode de réalisation de l'invention, la teneur en manganèse est comprise entre 0,4 % et 0,8 %.

Dans un mode de réalisation de l'invention, la teneur en azote est comprise entre 0,02 % et 0,05 %.

Dans un mode de réalisation de l'invention, la teneur en aluminium est comprise entre 0,005 % et 0,03 %.

Selon un mode de réalisation particulier de l'invention, la composition d'acier pour la fabrication de composants aux propriétés anti-cokage améliorées, est constituée en pourcentages massiques :
- de 0,08% % à 0,15 % de carbone (C),
- de 0,3 à 1 % de manganèse (Mn), préférentiellement entre 0,4 % à 0,8 % de manganèse (Mn),
- de 1,4 à 3 % de silicium (Si), préférentiellement entre 1,5 % et 2,5 % de silicium (Si),
- de 0,5 à 3 % de cuivre (Cu), préférentiellement entre 0,5 % et 2 % de cuivre (Cu),
- de 8 à 10 % de chrome (Cr),
- de 0,5 à 3 % de nickel (Ni), préférentiellement entre 0,5 % et 2,7 % de nickel (Ni),
- de 0,01 à 0,07 % d'azote (N), préférentiellement entre 0,02 % et 0,05 % d'azote (N),
- de 0,8 à 1,1 % de molybdène (Mo),
- de 0 à 0,04% d'aluminium (Al), préférentiellement entre 0,005 % et 0,03% d'aluminium (Al),
le reste de la composition comprenant du fer (Fe) et des impuretés telles que du phosphore (P) compris entre 0 et 0,025 %, du soufre (S) compris entre 0 et 0,02 %, du titane (Ti) compris entre 0 et 0,02 %, du niobium (Nb) compris entre 0 et 0,05 %, du vanadium (V) compris entre 0 et 0,05 %, du tungstène (W) compris entre 0 et 0,1 % et ou du cobalt (Co) compris entre 0 et 0,05 %.

Dans un mode de réalisation de l'invention, les pourcentages massiques de silicium (Si), de cuivre (Cu) et de nickel (Ni) respectent les inéquations suivantes :

| | |
|---|---|
| Si < 1,5^{∗}(0,3Cu + Ni) | pour Si < 2,5 % ; |
| 2^{∗}Si < 1,5^{∗}(0,3Cu + Ni) | pour Si ≥ 2,5 % ; |

et $Cu < Ni$

L'invention a aussi pour objet un composant tubulaire dont au moins une partie présente une composition d'acier selon l'un des modes de réalisation de la composition d'acier selon l'invention.

Dans un mode de réalisation, l'invention a aussi pour objet un composant tubulaire dont la partie présentant une composition d'acier selon l'un des modes de réalisation des compositions d'acier selon l'invention est agencée pour être mise au contact d'atmosphère chargée en coke.

D'autres caractéristiques, détails et avantages de l'invention apparaîtront à la lecture de la description détaillée ci-après, et des dessins annexés, sur lesquels :
- la figure 1 est une représentation d'un composant tubulaire selon l'invention,
- la figure 2 est une représentation schématique d'une coupe transversale d'un composant tubulaire soumis à des phénomènes de cokage de manière homogène,
- la figure 3 est une représentation schématique d'une coupe transversale d'un composant tubulaire soumis à des phénomènes de cokage de manière hétérogène,
- la figure 4 est un diagramme de Schaeffler et
- la figure 5 est une représentation schématique d'un banc de test de résistance au cokage.

Les dessins et la description ci-après contiennent, pour l'essentiel, des éléments de caractère certain. Ils font partie intégrante de la description, et pourront donc non seulement servir à mieux faire comprendre la présente invention, mais aussi contribuer à sa définition, le cas échéant.

La présente invention vise tout particulièrement la fabrication de composants tubulaires de fours de raffineries. Toutefois, la composition d'acier peut être utilisée pour la fabrication d'autres éléments susceptibles d'être exposés à des phénomènes de cokage.

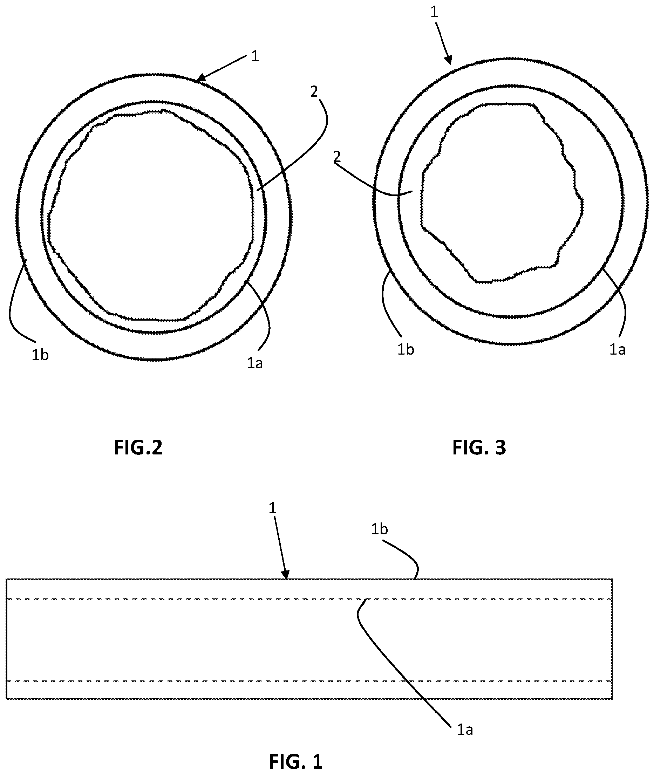

La figure 1 représente un composant tubulaire selon l'invention. La figure 2 est une coupe transversale du composant de la figure 1 après une exposition sensiblement homogène au cokage, correspondant par exemple à un composant tubulaire s'étendant sensiblement à la verticale. La figure 3 est une coupe transversale du composant de la figure 1 après une exposition sensiblement hétérogène au cokage, correspondant par exemple à un composant tubulaire s'étendant sensiblement à l'horizontale.

Chaque composant tubulaire porte la référence 1. Chaque surface intérieure est référencée la et chaque surface extérieure est référencée 1b. Les dépôts carbonés portent la référence 2. Pour chacun des composants tubulaires 1 des figures 2 et 3, le dépôt carboné 2 est initié en une surface de l'acier soumise au contact de fumées chargées en carbone. Dans les exemples décrits ici, la surface intérieure la du composant tubulaire 1 est soumise au passage de fumées carbonées. Le dépôt carboné 2 est initié à la surface intérieure la du composant tubulaire 1 puis croît au détriment de l'espace libre à l'intérieur du composant tubulaire 1.

Le Demandeur a effectué des tests comparatifs sur différents échantillons d'acier visant à constater leurs performances en résistance au cokage et leurs propriétés mécaniques. Les protocoles d'essai mis en œuvre sont décrits par la suite.

Les compositions chimiques des aciers testés sont données dans le tableau 1 suivant. Les valeurs y sont exprimées en pourcentage massique.

**Tableau 1**

| N° | C | Mn | Si | Cu | Cr | Ni | N | Mo | Al*max* | P | S | Ti | Nb |
|---|---|---|---|---|---|---|---|---|---|---|---|---|---|
| 1* | 0,11 | 0,40 | 0,28 | 0,10 | 8,43 | 0,09 | 0,02 | 0,97 | 0,005 | 0,005 | 0,004 | 0,002 | 0,009 |
| 2* | 0,11 | 0,39 | 1,02 | 0,10 | 8,27 | 0,09 | 0,02 | 0,95 | 0,004 | 0,005 | 0,004 | 0,002 | 0,008 |
| 3* | 0,11 | 0,39 | 2,02 | 0,01 | 8,16 | 0,09 | 0,03 | 0,93 | 0,005 | 0,005 | 0,003 | 0,002 | 0,008 |
| 4* | 0,11 | 0,97 | 1,96 | 0,11 | 8,26 | 0,10 | 0,02 | 0,90 | 0,006 | 0,005 | 0,004 | 0,002 | 0,008 |
| 5 | 0,11 | 0,39 | 1,98 | 1,02 | 8,51 | 0,97 | 0,02 | 0,93 | 0,004 | 0,005 | 0,004 | <0,012 | 0,007 |
| 6* | 0,11 | 0,42 | 2,50 | 0,11 | 8,27 | 0,09 | 0,02 | 0,86 | 0,006 | 0,005 | 0,003 | 0,003 | 0,009 |
| 7 | 0,1 | 0,5 | 1,48 | 0,99 | 8,76 | 0,95 | 0,03 | 1,01 | 0,002 | 0,015 | 0,007 | <0,012 | <0,014 |
| 8 | 0,1 | 0,5 | 2,49 | 2,06 | 8,89 | 2,56 | 0,03 | 1,01 | 0,002 | 0,015 | 0,007 | <0,012 | <0,014 |
| 9 | 0,09 | 0,42 | 2,01 | 0,50 | 8,90 | 1,45 | 0,03 | 1,02 | 0,01 | 0,015 | 0,007 | <0,012 | <0,014 |
| 10 | 0,1 | 0,5 | 1,98 | 1,50 | 9,08 | 0,55 | 0,04 | 1,02 | 0,01 | 0,015 | 0,007 | <0,012 | <0,014 |
| 11* | 0,1 | 0,51 | 3,54 | 2,55 | 8,86 | 5,02 | 0,03 | 0,99 | 0,01 | 0,015 | 0,007 | <0,012 | <0,014 |
| ** Exemples comparatifs* | | | | | | | | | | | | | |

L'échantillon 1* présente une composition d'acier choisie par le demandeur comme base de comparaison, composition classique d'un acier de type P9 tel que défini dans la norme ASTM A335.

Les échantillons 2* et 3* présentent des compositions similaires à celle de l'échantillon 1* à l'exception de leur teneur massique en silicium (Si) qui est respectivement d'environ 1 % et 2 %.

L'échantillon 4* présente une composition similaire à celle de l'échantillon 1* à l'exception des teneurs massiques en silicium (Si) et en manganèse (Mn) qui sont respectivement d'environ 2 % et 1 %.

La référence 5 présente une composition selon l'invention testée par le demandeur préalablement à la campagne de tests des références 7 à 11, présentant une teneur massique en silicium d'environ 2% et une teneur massique en cuivre d'environ 1%.

La référence 6* présente une composition similaire à celle de l'échantillon 1* à l'exception de la teneur massique en silicium (Si) qui est d'environ 2,5 %. La teneur en cuivre de l'échantillon 6* est réduite par rapport à l'échantillon 5.
Les références 7 à 11 correspondent à des compositions d'aciers réalisées dans un second temps.

Les mesures des teneurs massiques en éléments chimiques ont été vérifiées :
- par conductivité thermique après fusion pour l'azote (N) ;
- analyse infrarouge des gaz après combustion pour le carbone (C) et le soufre (S) ;
- par spectroscopie à étincelles (dites *"Spark-OES"*) pour les autres éléments chimiques.
Les techniques de mesure utilisées bénéficient chacune d'une accréditation d'un organisme d'accréditation français appelé COFRAC, à l'exception de celles pour la mesure du silicium (Si), du cuivre (Cu) et de l'azote (N).

Les éléments chimiques en partie gauche du tableau 1 (C, Mn, Si, Cu, Cr, Ni, N, Mo, Al) sont des éléments d'alliage (ou d'addition) volontairement ajoutés au Fer (Fe).

Les éléments chimiques en partie droite du tableau 1 (P, S, Ti, Nb) sont, ici, considérés comme des impuretés.

Les éléments d'impuretés sont volontairement maintenus à des teneurs massiques les plus basses possibles soit parce qu'ils ont un effet négatif sur les propriétés souhaitées, soit parce qu'ils ont un effet sensiblement neutre sur les propriétés souhaitées, soit parce qu'ils représentent un coût en matière première trop élevé pour une utilisation à l'échelle industrielle, soit parce que le demandeur souhaitait étudier les effets d'éléments chimiques d'addition en particulier sans que les teneurs en impuretés viennent parasiter les résultats, soit pour une combinaison de ces raisons.

De manière générale, il est préférable que les teneurs en phosphore (P) et soufre (S) soient les plus faibles possibles. Les propriétés mécaniques s'en trouvent améliorées. Le phosphore est un élément résiduel. Sa présence n'est pas requise car il contribue à la fragilisation au revenu, et est nuisible à la résilience de l'acier obtenu. Le phosphore augmente la trempabilité. Le soufre contribue principalement à la formation de sulfures qui réduisent la forgeabilité, la ductilité et la résilience, notamment en sens travers, de l'acier obtenu. Par exemple, les compositions d'acier ne comprennent pas plus de :
- 0,025 % de phosphore (P), et mieux pas plus de 0,022 % de phosphore,
- 0,02 % de soufre (S), et mieux pas plus de 0,015 % de soufre.

Par exemple, les compositions d'acier ne comprennent pas plus de :
- 0,02 % de titane (Ti),
- 0,05 % de niobium (Nb),

Des échantillons ont été produits à partir d'un four à vide à induction. Les lingots obtenus ont été ensuite découpés en blocs, enveloppés dans des feuilles d'aluminium pour réduire l'oxydation durant l'étape de mise en forme suivante, comprenant un préchauffage à 1100°C pour éviter l'apparition de fayalite puis un laminage en 6 passes, avec une réduction d'épaisseur de 80 mm jusqu'à une épaisseur 25 mm, la température initiale étant de 1100°C et la température lors de la dernière passe de laminage étant alors de 900°C. Les échantillons obtenus ont une dimension de 400 par 125 par 25 mm.

Des investigations préliminaires ont été menées de façon à détecter d'éventuels défauts tels que fissures, trous, ainsi que la présence d'inclusions (comptage selon la norme ASTM E45 méthode D). Les échantillons obtenus sont exempts de défauts notamment d'inclusions de type B, C qui sont néfastes vis-à-vis de la résilience.

Les échantillons ont ensuite fait l'objet de mesures dilatométriques pour déterminer des températures de traitement thermique Ac1 et Ac3, à l'aide d'un équipement Bähr DIL 805 D, et avec le cycle de température suivant : chauffage à 0,5°C/s, maintien à 1100°C pendant 5 minutes, et un refroidissement à un taux de 1°C/s jusqu'à la température ambiante.

Les échantillons sont ensuite soumis à des traitements thermiques de normalisation puis de revenu. Les températures de normalisation retenues sont de 30 à 50°C supérieures aux températures Ac3 obtenues par mesures dilatométriques, afin d'éliminer la microstructure telle qu'elle est obtenue après laminage. Les températures n'ont pas été augmentées de plus de 50°C pour éviter le grossissement des grains d'austénite. Les températures de revenu appliquées sont de 60°C inférieure aux températures Ac1 obtenues à partir des courbes dilatométriques, afin d'éviter l'apparition d'austénite.
Pour certains échantillons, des traitements thermiques supplémentaires ou alternatifs ont été testés, soit par augmentation de la température de normalisation, et/ou l'ajout d'une étape de normalisation, et/ou par refroidissement à l'eau au lieu d'un refroidissement à l'air.
Ces traitements thermiques sont résumés dans le tableau 2 ci-dessous pour les compositions d'aciers selon l'invention.

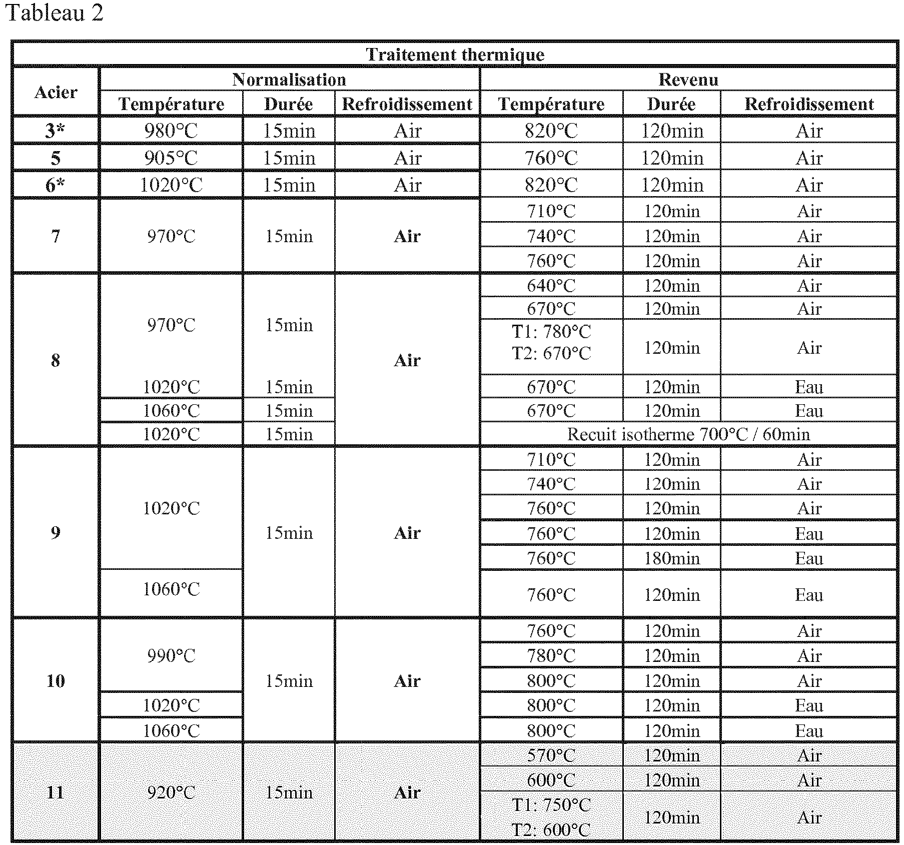

Les échantillons 8 et 11 ont fait l'objet d'un revenu en deux étapes afin de tester l'influence de ce traitement thermique sur la baisse des propriétés mécaniques de ces aciers.

La fabrication des échantillons implique pour chacun la réalisation d'une coulée d'acier et donc l'utilisation d'installations lourdes. Les essais, en particulier ceux s'étalant sur de longues durées et/ou réalisés au moyen de machines de mesure de haute précision, sont particulièrement coûteux. On comprendra qu'obtenir des résultats probants pour un nombre élevé de compositions est déraisonnablement long, délicat et dispendieux.

### Essais de cokage

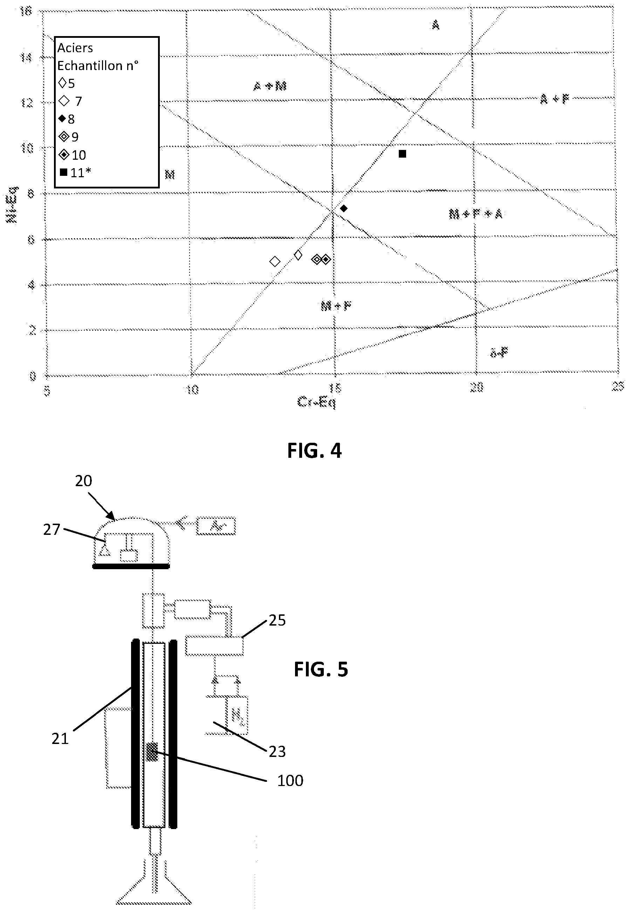

Un protocole expérimental a été mis en œuvre pour obtenir les résultats du tableau 3 ci-après. Les mesures sont effectuées au moyen d'un thermogravitomètre 20, schématiquement représenté en figure 5.

Dans les exemples décrits ici, les échantillons 100 sont des lingots de forme parallélépipédique et mesurent environ 10 millimètres par 5 millimètres par 2 millimètres. Un trou d'un diamètre d'environ 1,8 millimètre est percé dans chaque échantillon 100 afin de faciliter sa liaison avec le thermogravitomètre 20.

Avant d'être disposé dans le thermogravitomètre 20, chaque échantillon 100 est poncé. Ici, un papier abrasif à carbure de silicium de grains de taille moyenne d'environ 10,3 micromètres, référencé *"SiC 2000*", est utilisé. Le ponçage permet d'enlever l'oxydation et/ou les salissures éventuelles. L'échantillon est ensuite dégraissé, par nettoyage en bain d'acétone sous ultrasons.
La thermogravitomètrie permet de mesurer en continu la masse de l'échantillon 100. Le thermogravitomètre 20 utilisé ici est un "*SETARAM TG92*"*.* Il dispose d'une précision à un microgramme près sur la plage 0 à 20 grammes avec une incertitude d'environ 2 %.

Chaque échantillon 100 est placé dans un réacteur à quartz chauffant, ou four 21, et suspendu à un module de pesée 27 du thermogravitomètre 20. La température du four est régulée à plus ou moins 10°C. La température est sensiblement constante à l'emplacement de l'échantillon 100. Comme cela apparaît dans le tableau 2, des essais ont été menés respectivement à 650 °C et à 700 °C.

L'échantillon 100 est suspendu par l'intermédiaire d'un filetage en alliage fer-chrome-aluminium (FeCrAl), connu sous la référence commerciale "*Kanthal*"*.*

L'échantillon 100 est immergé dans un environnement gazeux contenant un mélange d'un composé dénommé *"Naphta"* référencé 23, et de dihydrogène (H₂).

Le naphta 23 utilisé ici porte la référence commerciale "*Naphta IFPEN 7939*"*.* La composition massique du naphta 23 est la suivante :
- 48,5 % de paraffine,
- 36 % de naphtène,
- 11,1 % de composés aromatiques,
- 4,3 % de toluène, et
- 0,1 % de benzène.

La masse volumique du naphta 23 utilisé ici est d'environ 0,75 grammes par centimètre cube. La masse molaire est d'environ 112,1 grammes par mole. Le facteur de caractérisation introduit par Universal Oil Products Company (généralement noté K_{UOP}) est de 11,9.

Le naphta 23 est introduit sous forme liquide puis vaporisé dans un évaporateur 25 du thermogravitomètre 20. La température de l'évaporateur 25 et des canaux de distribution est d'environ 200 °C. Les conditions expérimentales sont sélectionnées de sorte que le rapport molaire du dihydrogène sur le naphta 23 soit d'environ 4.

Le débit de naphta 23 liquide est d'environ 2 millilitres par heure. Le débit du dihydrogène est d'environ 1,2 litre par heure (soit 20ml/min). Le naphta 23 est décomposé par réaction avec l'hydrogène pour former la charge. Cette charge remplace expérimentalement les fumées ou fluides carbonés des conditions réelles. Dans les conditions expérimentales, un débit de charge sous forme gazeuse d'environ 72 litres par heure est injecté dans le four 21.

Pour protéger le module de pesée 27, un flux d'argon (Ar) est généré en continu dans le four 21. Le flux d'argon (Ar) présente un débit minimum d'environ 50 millilitres par minute s'additionnant au débit de la charge. L'argon (Ar) est injecté depuis le module de pesée 27 de manière à former un coussin gazeux occupant l'espace pour empêcher la charge sous forme gazeuse de venir au contact du module de pesée 27.

L'évolution de la masse, assimilable à l'évolution du dépôt de coke, est ensuite mesurée pendant une durée choisie. Ici, la durée des essais est de 5 heures ou 18 heures. La mesure de la masse est réalisée en continu pendant ces 18 heures.

Le tableau 3 ci-après représente les résultats de résistance au cokage des échantillons dont la composition chimique est donnée dans le tableau 1. "N.A." signifie *"non applicable*" car non disponible ou "*Not Available*" en Anglais. Les résultats sont exprimés en masse normalisée par unité de surface de l'échantillon 100 (niveau de cokage en grammes par mètre carré) en ce qui concerne le niveau de cokage à un moment donné ; et exprimés en masse normalisée par unité de surface de l'échantillon 100 et par heure (niveau de cokage en grammes par mètre carré heure) en ce qui concerne la vitesse de cokage.

**Tableau 3**

| Acier | A 650°C | | | | | A 700°C | | | | |
|---|---|---|---|---|---|---|---|---|---|---|
| | Vitesse initiale (g/m²h) | Vitesse à 5h (g/m²h) | Niveau cokage à 5h (g/m²) | Vitesse à 18h (g/m²h) | Niveau à 18h (g/m²) | Vitesse initiale (g/m²h) | Vitesse à 5h | Niveau cokage à 5h (g/m²) | Vitesse à 18h (g/m²h) | Niveau à 18h (g/m²) |
| 1* | / | | / | / | / | 38 | 9,5 | 88 | / | / |
| 2* | / | / | / | / | / | 27 | 2,7 | 35 | / | / |
| 3* | 3,7 | 0,3 | 3,1 | / | / | 4,6 | 0,2 | 5 | / | / |
| 4* | 3,7 | 0,2 | 4 | / | / | 6,6 | 0,2 | 4,6 | / | / |
| 5 | 1,1 | 0,1 | 1,2 | / | / | 3,6 | 0,2 | 2,8 | / | / |
| 7 | 0,5 | 0,03 | < 1,5 | 0,03 | 2,2 | 11,5 | 0,4 | 6 | 0,2 | 9,9 |
| 8 | 0,26 | 0,17 | < 1 | 0,14 | 2,9 | 1 | 0,2 | 2 | 0,2 | 5,5 |
| 9 | 0,6 | 0,05 | < 1 | 0,02 | 1,1 | 1,2 | 0,4 | 2,8 | 0,24 | 6,8 |
| 10 | / | / | / | / | / | 1,6 | 0,3 | 2,1 | 0,2 | 5,3 |
| 11* | 0,07 | 0,12 | < 1 | 0,08 | 1,9 | 0,3 | 0,2 | 1,6 | 0,19 | 4,1 |

La base de comparaison pour un acier P9 standard est d'une vitesse initiale de cokage de 38 g/m²h et un niveau de cokage de 88 g/m² au bout de 5 heures à 700°C. L'acier P9 amélioré avec 2% de silicium ou acier 3* de l'état de la technique permet une amélioration importante, avec une vitesse initiale de cokage de 4,6 g/m²h et un niveau de cokage de 5 g/m² au bout de 5 heures à 700°C, montrant un phénomène de cokage très ralenti au bout de 5 heures. A 650°C, l'acier 3* présente une vitesse initiale de cokage de 3,7 g/m²h et un niveau de cokage de 3,1 g/m² au bout de 5 heures.

Plus la température est importante, plus le dépôt de coke est important.

Les résultats de test de l'échantillon 2* et l'échantillon 3* montrent que l'ajout supplémentaire de silicium avec respectivement 1% et 2% de silicium en masse permet de réduire significativement le phénomène de cokage, avec une vitesse initiale respectivement près de 1 fois et demi et près de 8 fois plus petite que l'échantillon de référence 1*. Aussi, après 5 heures de test, la vitesse de cokage est réduite jusqu'à une vitesse très basse, de l'ordre de 0,2 g/m²h. Le silicium permet de réduire le phénomène de cokage, plus il y a de silicium, plus le cokage est ralenti.

L'échantillon 4* comprend 2% en masse de silicium, comme l'échantillon 3*, et comprend en plus 1% de manganèse. A 650°C, la vitesse initiale est la même que pour l'échantillon 3*, de 3,7 g/m²h, A 700°C, la vitesse de cokage initiale est un peu plus élevée que pour l'échantillon 3*, avec 6,6 g/m²h contre 4,6 g/m²h ; cependant, le niveau de cokage à 5 heures est du même ordre, autour de 5 g/m². La vitesse de cokage initiale semble être plus importante ou se maintenir un peu plus longtemps que pour l'échantillon 3*. D'après ces essais, le manganèse ne semble pas permettre de réduire le phénomène cokage.

L'échantillon 5 comprend 2% silicium, comme l'échantillon 3*, et comprend en outre 1% cuivre et 1% nickel. A 650°C, la vitesse initiale de cokage est plus de trois fois inférieure à celle de l'échantillon 3*, avec seulement 1,1g/m²h. Le niveau de cokage à 5 heures s'en trouve réduit de près de trois fois également. L'adjonction de cuivre et de nickel permet donc de réduire significativement le phénomène de cokage, dès son initiation. A 700°C, la vitesse initiale de cokage est 25% plus faible que pour l'échantillon 3*, et dix fois plus faible que l'échantillon de référence 1*.

L'échantillon 7 qui correspond à l'échantillon 5 avec seulement 1,5% de silicium montre de très bons résultats à 650°C, avec une vitesse initiale de cokage encore divisée par deux par rapport à celle de l'échantillon 5, mais une vitesse initiale de cokage à 700°C plus élevée que celle de l'échantillon 5, avec 11,5 g/m²h en comparaison avec 3,6g/m²h. Cependant, cette vitesse reste encore satisfaisante car bien inférieure à celles des échantillons de référence 1* et 2*; et cette vitesse initiale semble chuter très rapidement car au bout de 5 heures, le niveau de cokage est relativement faible, très proche de celui de l'échantillon 5. Ce test montre que l'on semble atteindre une limite basse de la teneur en silicium conjuguée avec celle du nickel et du cuivre pour obtenir un effet de réduction du phénomène de cokage à plus haute température. Avec une teneur moindre en silicium, il est possible d'obtenir une résistance au phénomène de cokage équivalente à celle d'un acier plus chargé en silicium. Cet échantillon montre l'effet inhibiteur du cuivre sur le cokage. Si le silicium a pour effet de diminuer le taux de cokage initial, le cuivre a pour effet de ralentir rapidement la vitesse de cokage de l'échantillon.

Les échantillons 8 et 11* présentent de fortes teneurs en silicium, en cuivre et en nickel, et montrent des réductions importantes du phénomène de cokage, avec même des vitesses initiales parfois très réduites comme c'est le cas pour l'échantillon 11*. Cependant, le gain est important par rapport aux échantillons 1* à 4*, mais le gain est aussi significatif par rapport à l'échantillon 7. Cependant, le gain est plus mesuré par rapport aux échantillons 10 et 9, notamment à une température de 700°C.
L'échantillon 10, qui comprend 2% de silicium et 0,5% de cuivre, ainsi que 1,5% de nickel, montre en comparaison avec l'échantillon 3* qu'il y a un effet synergistique dans la réduction du cokage et ce dès la présence de 0,5% de cuivre dans l'acier.

En terme de constatations plus générales, à 650°C, tous les échantillons inventifs testés se révèlent avoir un excellent comportement au cokage. Au bout de 5 heures, le niveau de cokage est inférieur à 1,2 g/m², inférieur à celui de la nuance comparative 3* et ses 3,1 g/m².

A 700°C : Tous les aciers de l'invention présentent toujours des niveaux de cokage très inférieurs à 1* et à 2* dès le début du test, avec une vitesse de cokage qui diminue très rapidement.

On remarquera également que le critère de performance important est la vitesse initiale de cokage. En effet, lorsque l'initiation du dépôt de cokage est achevée et qu'une couche de coke recouvre un échantillon, l'effet de protection procuré par les éléments de l'acier est naturellement amoindri. Il semble d'après les résultats d'essais que la vitesse de cokage de l'ordre de 0,2 g/m²h corresponde à la vitesse de cokage minimale atteignable lorsqu'une couche de coke est formée sur la paroi de l'échantillon au bout de 18 heures.

### Essais mécaniques

Les échantillons traités ont été soumis à des essais mécaniques. Des essais de résilience Charpy ont été réalisés. Le protocole expérimental utilisé est basé sur les normes ASTM A370-15 pour la préparation des échantillons et ASTM E23-12c pour les essais Charpy.

La résilience est testée en direction transversale selon la norme ASTM E23-12c par essai de choc sur une entaille en V par la méthode Charpy. La direction transversale est choisie car elle est la plus critique pour un tube en acier laminé. Les essais sont réalisés à des températures de 20°C, de 0°C, de -30°C. Il est également intéressant que l'acier présente une résilience satisfaisante à basses températures. La valeur représentative de résilience est l'énergie minimale absorbée pour une température donnée et est donnée en Joules. Les résultats sont comparés avec les exigences de la norme NF EN 10216-2, et avec les exemples comparatifs 3* et 6* tels que connu dans l'état de l'art.

Le tableau 4 ci-après représente les résultats de résilience des échantillons dont la composition chimique est donnée dans le tableau 1. Le tableau donne uniquement la moyenne de l'énergie mesurée au cours de 3 essais tels qu'exigés par la norme. Les aciers ont été testés avec différents traitements thermiques et pour trois températures de test : 20°C, 0°C et -30°C.

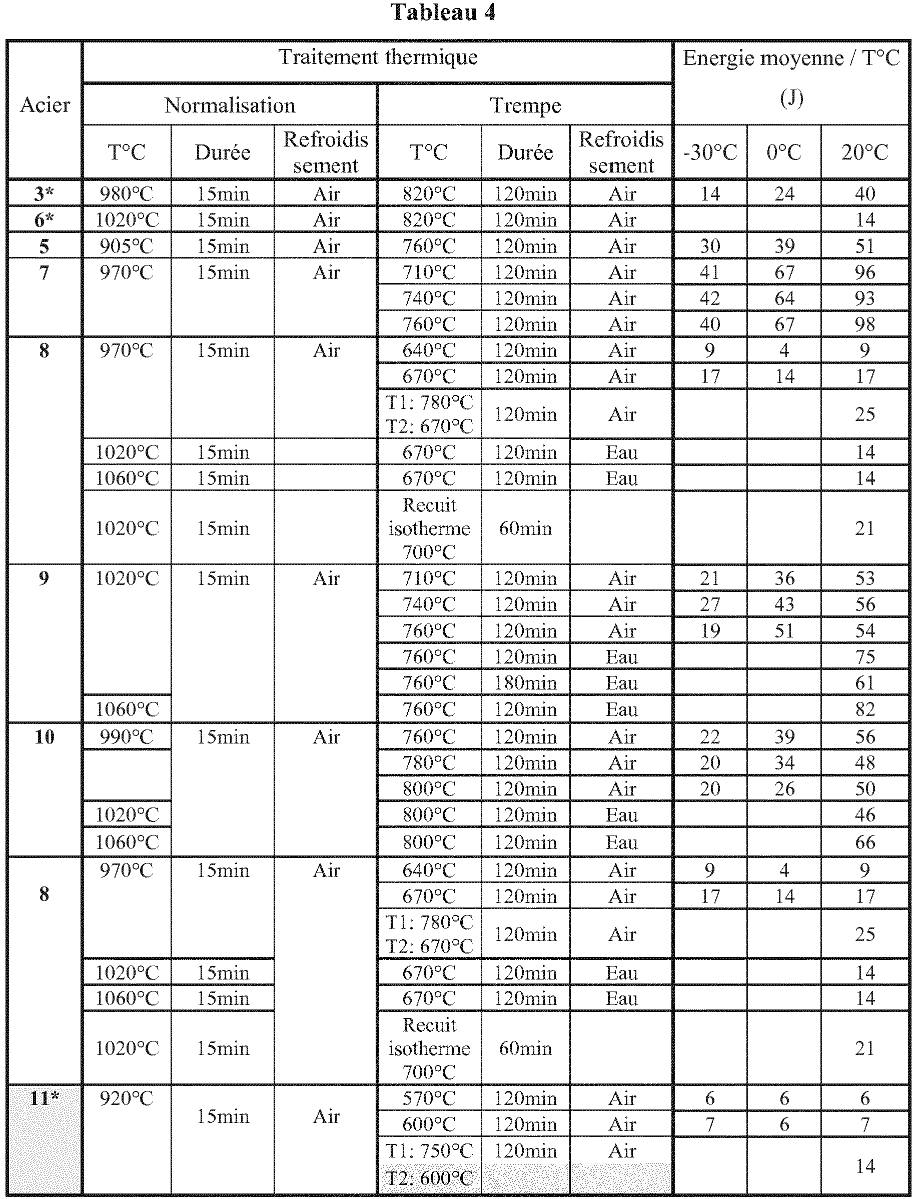

L'énergie moyenne de rupture minimale définie par la norme NF EN 10216-2 pour ce type d'acier est de 40 Joules minimum en sens longitudinal à 20°C ; 27 J minimum en sens transversal à 20°C.

L'échantillon 3* présente des résultats des résultats de résilience de 40 Joules en sens transversal à 20°C.

L'échantillon 6*, avec 2,5% de silicium, a une résilience très dégradée, à 14 J, et se retrouve bien en dessous du seuil requis par la norme.

L'échantillon 7 montre une résilience bien supérieure aux exemples comparatifs. Le résultat à -30°C est même supérieur ou égale aux performances à 20°C des exemples de l'état de l'art. De plus, les valeurs atteintes à 20°C se situent largement dans les exigences de la norme NF EN 10216-2.

L'échantillon 8 n'atteint pas des valeurs de résilience correspondant aux exigences de la norme mais permet d'améliorer la résilience de l'acier en la doublant dans le sens transversal avec 25 J à 20°C au lieu de 14 J à 20°C de l'échantillon 6*. L'ajout de nickel et de cuivre permet donc de réduire l'effet néfaste du silicium sur la résilience de l'acier. Néanmoins, les différents essais montrent qu'un traitement thermique adapté permet de se rapprocher fortement de l'exigence de la norme et que l'acier 8 peut répondre à l'exigence de la norme.

L'acier 10 présente 2% Si et 0,5% Cu et 1,5% Ni. On constate une amélioration de la résilience très importante, d'un facteur 2 à 20°C par rapport aux aciers comparatifs 3* et 6* (respectivement P9+2%Si, P9+2.5%Si). L'échantillon 9 qui présente 2% Si et 1,5% Cu et 0,5% Ni montre des performances sensiblement de même niveau tout en étant légèrement inférieurs à ceux de l'échantillon 10. Le nickel et le cuivre permettent donc de compenser la présence plus importante de silicium et d'augmenter la résilience de l'acier. Le nickel a un rôle plus prépondérant dans l'augmentation de la résilience que le cuivre.

L'échantillon 11* comprend du silicium, du nickel et du cuivre en fortes teneurs, avec 3,5% Si et 5,5% Ni et 2,5% Cu. On obtient selon le traitement thermique un acier dont la résilience est au mieux seulement au niveau d'un acier de l'état de la technique comme l'acier 6*. Une trop grande proportion de silicium détériore les propriétés mécaniques de résilience de l'acier que l'addition de nickel et de cuivre ne peut compenser.

En résumé, en comparant les premiers résultats d'essais, correspondant aux références 1 à 6, le demandeur a constaté que l'ajout de silicium (Si) améliorait sensiblement les performances en cokage. Cependant, l'ajout de silicium (Si) tend également à réduire la résilience de l'acier. Par conséquent, l'ajout de silicium (Si) ne suffit pas à améliorer les propriétés de résistance au cokage tout en préservant les propriétés mécaniques des aciers.

D'autre part, les résultats obtenus montrent que la réduction du cokage en fonction de l'ajout de silicium (Si) devient faible lorsque la proportion de silicium (Si) augmente (cf. références 1*, 2* et 3*).

Le demandeur a réalisé les mêmes essais de cokage et de résilience sur un échantillon 5 d'acier combinant l'ajout de silicium (Si) avec d'autres éléments chimiques. Le demandeur a constaté que l'ajout combiné de silicium (Si), de nickel (Ni) et de cuivre (Cu) par rapport à la référence 1 conférait à l'acier non seulement de meilleures propriétés de résistance au cokage, mais améliorait également les propriétés mécaniques, et notamment la résilience par rapport aux échantillons comparatifs.

À partir des résultats obtenus pour la référence 5 des tableaux 1 à 4, le demandeur a essayé de confirmer ses constatations par la réalisation de tests ultérieurs correspondant aux échantillons référencés 7 à 11 des tableaux 1 à 4.

Les résultats obtenus montrent que la présence combinée de silicium (Si), de cuivre (Cu) et de nickel (Ni) permet d'obtenir des aciers dont les propriétés à la fois en résistance au cokage et en résilience, sont particulièrement avantageuses.

L'acier selon l'invention comprend notamment les éléments suivants.

### Carbone

Le carbone est présent jusqu'à 0,15% en masse. Au-delà, la soudabilité de l'acier est détériorée. La teneur en carbone est supérieure ou égale à 0,08% en masse, afin d'éviter la formation de ferrite delta. En dessous de 0,08% les propriétés de fluage de l'acier peuvent se dégrader. De préférence encore, la teneur en carbone est supérieure ou égale à 0,09% et inférieure ou égale à 0,11%.

### Manganèse

Le manganèse est un élément désoxydant et désulfurant de l'acier en fusion. Le manganèse améliore la trempabilité et par conséquent la résistance de l'acier final. Quand la teneur en manganèse est supérieure à 1,5%, le risque de former des inclusions de sulfure de manganèse augmente, or ces inclusions nuisent à la résilience de l'acier. Par conséquent la teneur en manganèse est préférée entre 0,3% et 1%, et encore mieux entre 0,4% et 0,8%, pour une optimisation du compromis entre résilience de l'acier et trempabilité.

### Silicium

Le silicium est avec le chrome un élément désoxydant de l'acier. Le silicium permet la formation d'une couche d'oxyde protectrice à la surface de l'acier. Silicium et chrome forment des oxydes SiO₂ et Cr₂O₃. Cette couche d'oxyde forme un film protecteur contre le phénomène de cokage.

Cependant, le silicium est un élément alphagène dont il est connu qu'il faut en limiter la teneur pour éviter la formation de ferrite delta. Lorsque sa teneur est trop importante, il favorise également les précipitations fragilisantes en service. Il est connu de limiter à 1% en masse maximum sa teneur dans l'acier.

Lors de tests, le demandeur a découvert qu'il était possible d'aller au-delà de cette teneur tout en conservant des propriétés mécaniques acceptables pour l'acier, grâce à l'addition de nickel et de cuivre.

En effet, le taux de cokage des aciers est fortement diminué tout en préservant les qualités mécaniques de l'acier avec une teneur en silicium supérieure ou égale à 1,4% en masse. Cet effet est encore amélioré jusqu'à 3% en masse de silicium. Au delà de cette limite, il n'est plus possible de maintenir les qualités de l'acier. L'effet le plus important est observé pour une teneur en silicium supérieure ou égale à 1,5% et inférieure ou égale à 2,5%.

### Chrome

Le chrome joue un rôle essentiel dans la résistance à la corrosion et la résistance à l'oxydation à haute température. Il est nécessaire d'en avoir un teneur minimale de 8% pour atteindre les effets recherchés pour une utilisation dans des installations de traitement et de transformation de produits pétroliers. Cependant, le risque de formation de ferrite delta associé à la présence de chrome conduit à limiter la teneur en chrome à 10% pour ne pas affecter la résilience de l'acier.

### Azote

L'azote est un élément gammagène contribuant à la formation d'austénite, et permettant de réduire la formation de ferrite delta (ferrite δ) qui nuisent à la résilience de l'acier. L'azote permet également de générer des nitrures plus stables et plus petits que des équivalents carburés. Afin de limiter les risques de défauts, tels que des soufflures dans les lingots ou les billettes, ou durant des opérations de soudage, il est préférable de limiter la teneur en azote à une valeur comprise entre 0,01% et 0,07%, et encore mieux comprise entre 0,02 % et 0,05%.

### Molybdène

Le molybdène améliore la trempabilité de l'acier, et notamment l'efficacité de l'adoucissement au revenu. Le molybdène réduit la pente de la courbe de revenu, et facilite la maîtrise du traitement thermique. A cet effet, une teneur minimale en molybdène est requise à 0,8%. Cependant une teneur trop élevée en molybdène pourrait entraîner la génération d'oxyde de molybdène MnO₃, qui ne sont pas stables à haute température et qui empêchent une bonne résistance à la corrosion à haute température. Le molybdène est également générateur de ferrite delta, affectant la résilience de l'acier. Pour ces raisons, il est préférable de limiter la teneur en molybdène à 1,1%.

### Nickel

Le nickel est un élément gammagène et retarde l'apparition de ferrite. La ferrite est néfaste vis-à-vis de la propriété de résilience de l'acier. De plus, le nickel favorise la formation de phase austénite. Les tests ont montré que l'ajout de nickel dans un acier comportant les proportions de silicium décrites ci-avant permet d'obtenir un acier avec une forte résilience. Le Demandeur a constaté avec surprise qu'il participait également à la réduction du phénomène de cokage. Ces effets sont obtenus à partir de 0,5% en masse de Nickel dans l'acier, et jusqu'à 3% en masse, préférentiellement jusqu'à 2,7% en masse. Au-delà, la résilience de l'acier obtenu n'est pas satisfaisante.

### Cuivre

Le cuivre est un élément important de l'invention. Le demandeur a découvert avec surprise qu'il était possible d'améliorer encore plus la résistance au cokage de l'acier avec un ajout de cuivre.

Le cuivre permet de ralentir voire de supprimer la dissociation du carbone et de l'oxygène dans l'acier. Il permet également de ralentir la diffusion du carbone dans l'acier et de ralentir le phénomène de cokage.

La combinaison de la présence de cuivre en plus de la présence du silicium dans l'acier ralenti considérablement le cokage d'une paroi : lorsque des défauts tels que des craquelures apparaissent dans la couche d'oxyde, le phénomène de cokage est ralenti par la présence de cuivre au niveau de ce défaut. Ces deux effets agissent en synergie pour obtenir une résistance au cokage de l'acier considérablement améliorée.

Ces effets sont obtenus à partir d'une concentration supérieure ou égale à 0,5% en masse de cuivre et jusqu'à 3% en masse de cuivre. Au-delà, l'effet supplémentaire du cuivre est plus limité. De préférence, la teneur maximale en cuivre est de 2% en masse.

### Aluminium

Cet élément n'est pas nécessaire en soi pour obtenir les caractéristiques métallurgiques souhaitées dans le cadre de l'invention et il est ici considéré comme résiduel d'élaboration ; son addition est donc laissée optionnelle. C'est un puissant désoxydant du métal. Cet élément étant également alphagène et avide d'azote, des teneurs en Al supérieures à 0,04% sont défavorables. Selon les besoins, on pourra si nécessaire ajouter l'aluminium pour obtenir une teneur finale pouvant aller jusqu'à 0,04%, et préférentiellement une teneur finale comprise entre 0,005 et 0,03%.

En figure 4, un diagramme de Schaeffler est représenté. Sur ce diagramme, l'axe des abscisses symbolise la teneur en éléments chimiques alphagènes de l'acier nommée "équivalent chrome". La formule définissant la teneur en équivalent chrome est donnée ci-dessous. L'axe des ordonnées symbolise la teneur en éléments chimiques gammagènes de l'acier nommée "équivalent nickel". La formule définissant la teneur en équivalent nickel est donnée ci-dessous : ${Cr}_{éq} = Cr + 2 ∗ Si + 1,5 ∗ Mo + 5 ∗ V + 5,5 ∗ Al + 1,75 ∗ Nb + 1,5 ∗ Ti + 0,75 ∗ W$ ${Ni}_{éq} = Ni + Co + 30 ∗ C + 0,5 ∗ Mn + 0,3 ∗ Cu + 25 ∗ N$

En plaçant chaque composition d'acier dans un tel diagramme, il est théoriquement possible de prévoir la structure cristalline dudit acier.

Il est préférable de rester hors du domaine ferritique des aciers. Le comportement mécanique et la durée de vie de pièces en acier se dégradent avec l'augmentation de la proportion ferritique dans la structure martensitique. Une structure ferritique est évitée lorsque la composition chimique est telle que l'une au moins, et de préférence les deux inéquations suivantes, exprimées en pourcentages massiques, sont respectées :

| | |
|---|---|
| Si < 1,5^{∗}(0,3Cu + Ni) | pour Si < 2,5 % ; |
| 2^{∗}Si < 1,5^{∗}(0,3Cu + Ni) | pour Si ≥ 2,5 % ; |

et $Cu < Ni$

Autrement dit, il est préférable que la teneur massique en cuivre (Cu) soit inférieure à la teneur massique en nickel (Ni), pour améliorer le comportement de l'acier lors d'un laminage.

L'invention ne se limite pas aux exemples de compositions d'acier et de composants tubulaires décrits ci-avant, seulement à titre d'exemples, mais elle englobe toutes les variantes que pourra envisager l'homme de l'art dans le cadre des revendications ci-après.

La combinaison de la présence de cuivre en plus de la présence du silicium dans l'acier ralenti considérablement le cokage d'une paroi : lorsque des défauts tels que des craquelures apparaissent dans la couche d'oxyde, le phénomène de cokage est ralenti par la présence de cuivre au niveau de ce défaut. Ces deux effets agissent en synergie pour obtenir une résistance au cokage de l'acier considérablement améliorée.
Ces effets sont obtenus à partir d'une concentration supérieure ou égale à 0,5% en masse de cuivre et jusqu'à 3% en masse de cuivre. Au-delà, l'effet supplémentaire du cuivre est plus limité. De préférence, la teneur maximale en cuivre est de 2% en masse.

### Aluminium

Cet élément n'est pas nécessaire en soi pour obtenir les caractéristiques métallurgiques souhaitées dans le cadre de l'invention et il est ici considéré comme résiduel d'élaboration ; son addition est donc laissée optionnelle. C'est un puissant désoxydant du métal. Cet élément étant également alphagène et avide d'azote, des teneurs en Al supérieures à 0,04% sont défavorables. Selon les besoins, on pourra si nécessaire ajouter l'aluminium pour obtenir une teneur finale pouvant aller jusqu'à 0,04%, et préférentiellement une teneur finale comprise entre 0,005 et 0,03%.

En figure 4, un diagramme de Schaeffler est représenté. Sur ce diagramme, l'axe des abscisses symbolise la teneur en éléments chimiques alphagènes de l'acier nommée "équivalent chrome". La formule définissant la teneur en équivalent chrome est donnée ci-dessous. L'axe des ordonnées symbolise la teneur en éléments chimiques gammagènes de l'acier nommée "équivalent nickel". La formule définissant la teneur en équivalent nickel est donnée ci-dessous : ${Cr}_{éq} = Cr + 2 ∗ Si + 1,5 ∗ Mo + 5 ∗ V + 5,5 ∗ Al + 1,75 ∗ Nb + 1,5 ∗ Ti + 0,75 ∗ W$ ${Ni}_{éq} = Ni + Co + 30 ∗ C + 0,5 ∗ Mn + 0,3 ∗ Cu + 25 ∗ N$

En plaçant chaque composition d'acier dans un tel diagramme, il est théoriquement possible de prévoir la structure cristalline dudit acier.

Il est préférable de rester hors du domaine ferritique des aciers. Le comportement mécanique et la durée de vie de pièces en acier se dégradent avec l'augmentation de la proportion ferritique dans la structure martensitique. Une structure ferritique est évitée lorsque la composition chimique est telle que l'une au moins, et de préférence les deux inéquations suivantes, exprimées en pourcentages massiques, sont respectées :

| | |
|---|---|
| Si < 1,5^{∗}(0,3Cu + Ni) | pour Si < 2,5 % ; |
| 2^{∗}Si < 1,5^{∗}(0,3Cu + Ni) | pour Si ≥ 2,5 % ; |

et $Cu < Ni$

Autrement dit, il est préférable que la teneur massique en cuivre (Cu) soit inférieure à la teneur massique en nickel (Ni), pour améliorer le comportement de l'acier lors d'un laminage.

L'invention ne se limite pas aux exemples de compositions d'acier et de composants tubulaires décrits ci-avant, seulement à titre d'exemples, mais elle englobe toutes les variantes que pourra envisager l'homme de l'art dans le cadre des revendications ci-après.

## Revendications

1. Composition d'acier pour la fabrication de composants aux propriétés anti-cokage améliorées, consistant en pourcentage massique :
- de 0,08% à 0,15 % de carbone (C),
- de 0,3 à 1 % de manganèse (Mn),
- de 1,4 à 3 % de silicium (Si),
- de 0,5 à 3 % de cuivre (Cu),
- de 8 à 10 % de chrome (Cr),
- de 0,5 à 3 % de nickel (Ni),
- de 0,01 à 0,07 % d'azote (N),
- de 0,8 à 1,1 % de molybdène (Mo),
- de 0 à 0,04% d'aluminium (Al),
le reste de la composition étant du fer (Fe) et des impuretés, parmi lesquelles la teneur massique des impuretés suivantes ne dépasse pas :
- 0,025 % de phosphore (P),
- 0,02 % de soufre (S),
- 0,02 % de titane (Ti),
- 0,05 % de niobium (Nb),
- 0,05 % de vanadium (V),
- 0,1 % de tungstène (W), et
- 0,05 % de cobalt (Co).

2. Composition d'acier selon l'une des revendications précédentes, comprenant en pourcentage massique entre **0,09 %** et **0,11 %** de carbone (C).

3. Composition d'acier selon l'une des revendications précédentes, comprenant en pourcentage massique entre **1,5 %** et **2,5 %** de silicium (Si).

4. Composition d'acier selon l'une des revendications précédentes, comprenant en pourcentage massique entre **0,5 %** et **2 %** de cuivre (Cu).

5. Composition d'acier selon l'une des revendications précédentes, comprenant en pourcentage massique entre **0,5 %** et **2,7 %** de nickel (Ni).

6. Composition d'acier selon l'une des revendications précédentes, comprenant en pourcentage massique entre 0,4 % et 0,8 % en manganèse.

7. Composition d'acier selon l'une des revendications précédentes, comprenant en pourcentage massique entre 0,02 % et 0,05 % en azote.

8. Composition d'acier selon l'une des revendications précédentes, comprenant en pourcentage massique entre 0,005 % et 0,03 % en aluminium.

9. Composition d'acier selon l'une des revendications précédentes, dans laquelle les pourcentages massiques de silicium (Si), de cuivre (Cu) et de nickel (Ni) respectent les inéquations suivantes :
| | |
|---|---|
| Si < 1,5^{∗}(0,3Cu + Ni) | pour Si < 2,5 % ; |
| 2^{∗}Si < 1,5^{∗}(0,3Cu + Ni) | pour Si ≥ 2,5 % ; |
et $Cu < Ni$

10. Composant tubulaire dont au moins une partie présente une composition d'acier selon l'une des revendications précédentes.

11. Composant tubulaire selon la revendication 10 dont la partie présentant une composition d'acier selon l'une des revendications 1 à 9 est agencée pour être mise au contact d'atmosphère chargée en coke.

## Patentansprüche

1. Stahlzusammensetzung für die Herstellung von Komponenten mit verbesserten Antikokungseigenschaften, die, in Massenanteil, besteht aus:
- 0,08 % bis 0,15 % Kohlenstoff (C),
- 0,3 bis 1 % Mangan (Mn),
- 1,4 bis 3 % Silizium (Si),
- 0,5 bis 3 % Kupfer (Cu),
- 8 bis 10 % Chrom (Cr),
- 0,5 bis 3 % Nickel (Ni),
- 0,01 bis 0,07 % Stickstoff (N),
- 0,8 bis 1,1 % Molybdän (Mo),
- 0 bis 0,04 % Aluminium (Al),
wobei der Rest der Zusammensetzung
Eisen (Fe) und Verunreinigungen ist, bei denen der Massenanteil der
folgenden Verunreinigungen nicht überschreitet:
- 0,025 % Phosphor (P),
- 0,02 % Schwefel (S),
- 0,02 % Titan (Ti),
- 0,05 % Niob (Nb).
- 0,05 % Vanadium (V),
- 0,1 % Wolfram (W) und
- 0,05 % Kobalt (Co).

2. Stahlzusammensetzung gemäß einem der vorstehenden Ansprüche, die in Massenprozent zwischen **0,09 %** und **0,11 %** Kohlenstoff (C) umfasst.

3. Stahlzusammensetzung gemäß einem der vorstehenden Ansprüche, die in Massenprozent zwischen **1,5 %** und **2,5 %** Silizium (Si) umfasst.

4. Stahlzusammensetzung gemäß einem der vorstehenden Ansprüche, die in Massenprozent zwischen **0,5 %** und **2 %** Kupfer (Cu) umfasst.

5. Stahlzusammensetzung gemäß einem der vorstehenden Ansprüche, die in Massenprozent zwischen **0,5 %** und **2,7 %** Nickel (Ni) umfasst.

6. Stahlzusammensetzung gemäß einem der vorstehenden Ansprüche, die in Massenprozent zwischen 0,4 % und 0,8 % Mangan umfasst.

7. Stahlzusammensetzung gemäß einem der vorstehenden Ansprüche, die in Massenprozent zwischen 0,02 % und 0,05 % Stickstoff umfasst.

8. Stahlzusammensetzung gemäß einem der vorstehenden Ansprüche, die in Massenprozent zwischen 0,005 % und 0,03 % Aluminium umfasst.

9. Stahlzusammensetzung gemäß einem der vorstehenden Ansprüche, bei der die Massenprozentsätze von Silizium (Si), Kupfer (Cu) und Nickel (Ni) den folgenden Ungleichungen entsprechen:
| | |
|---|---|
| Si < 1,5^{∗}(0,3 Cu + Ni) | für Si < 2,5 %; |
| 2^{∗}Si < 1,5^{∗}(0,3 Cu + Ni) | für Si ≥ 2,5 %; |
und $Cu < Ni$

10. Rohrförmige Komponente, von der mindestens ein Teil eine Stahlzusammensetzung gemäß einem der vorstehenden Ansprüche aufweist.

11. Rohrförmige Komponente nach Anspruch 10 deren Teil, der eine Stahlzusammensetzung nach einem der Ansprüche 1 bis 9 aufweist, so ausgelegt ist, dass er mit einer mit Koks belasteten Atmosphäre in Kontakt gebracht werden kann.

## Claims

1. Steel composition for the production of components with improved anti-coking properties, consisting of in weight percentage:
- from 0.08% to 0.15% carbon (C),
- from 0.3 to 1% manganese (Mn),
- from 1.4 to 3% silicon (Si),
- from 0.5 to 3% copper (Cu),
- from 8 to 10% chromium (Cr),
- from 0.5 to 3% nickel (Ni),
- from 0.01 to 0.07% nitrogen (N),
- from 0.8 to 1.1% molybdenum (Mo),
- from 0 to 0.04% aluminum (Al),
the remainder of the composition being
iron (Fe) and impurities, for which the mass content of the following impurities does not exceed:
- 0.025% phosphorus (P),
- 0.02% sulfur (S),
- 0.02% titanium (Ti),
- 0.05% niobium (Nb),
- 0.05% vanadium (V),
- 0.1% tungsten (W), and
- 0.05% cobalt (Co).

2. Steel composition according to one of the preceding claims, comprising in weight percentage between **0.09%** and **0.11%** carbon (C).

3. Steel composition according to one of the preceding claims, comprising in weight percentage between **1.5%** and **2.5%** silicon (Si).

4. Steel composition according to one of the preceding claims, comprising in weight percentage between **0.5%** and **2%** copper (Cu).

5. Steel composition according to one of the preceding claims, comprising in weight percentage between **0.5%** and **2.7%** nickel (Ni).

6. Steel composition according to one of the preceding claims, comprising in weight percentage between 0.4% and 0.8% manganese.

7. Steel composition according to one of the preceding claims, comprising in weight percentage between 0.02% and 0.05% nitrogen.

8. Steel composition according to one of the preceding claims, comprising in weight percentage between 0.005% and 0.03% aluminum.

9. Steel composition according to one of the preceding claims, in which the weight percentages of silicon (Si), copper (Cu) and nickel (Ni) comply with the following inequalities: $Si < 1.5 ∗ \left(0.3Cu+Ni\right) for Si < 2.5 % ;$ $2 ∗ Si < 1.5 ∗ \left(0.3Cu+Ni\right) for Si \geq 2.5 % ;$ and $Cu < Ni$

10. Tubular component, at least part of which has a steel composition according to one of the preceding claims.

11. Tubular component according to claim 10, in which the part with a steel composition according to one of claims 1 to 9 is arranged to be brought into contact with a coke-charged atmosphere.
